(19)

Europäisches Patentamt
European Patent Office
Office européen des brevets

(11) **EP 1 382 391 B1**

(12) **EUROPÄISCHE PATENTSCHRIFT**

(45) Veröffentlichungstag und Bekanntmachung des Hinweises auf die Patenterteilung:
**11.04.2007   Patentblatt 2007/15**

(51) Int Cl.:
*B01J 29/04* (2006.01)       *C01B 37/00* (2006.01)

(21) Anmeldenummer: **03016846.2**

(22) Anmeldetag: **08.06.1998**

(54) **Granulate, enthaltend Titansilikalit-1**

Titanium silicalite 1 containing granulate

Granulés contenant de la silicalite 1 de titane

(84) Benannte Vertragsstaaten:
**BE DE ES FR GB IT NL SE**

(30) Priorität: **23.07.1997   DE 19731627**

(43) Veröffentlichungstag der Anmeldung:
**21.01.2004   Patentblatt 2004/04**

(62) Dokumentnummer(n) der früheren Anmeldung(en) nach Art. 76 EPÜ:
**98110481.3 / 0 893 158**

(73) Patentinhaber: **Degussa GmbH
40474 Düsseldorf (DE)**

(72) Erfinder:
• **Hasenzahl, Steffen, Dr.
63454 Hanau (DE)**
• **Markowz, Georg, Dr.
63791 Karlstein (DE)**

• **Viandt, Mathias
55131 Mainz (DE)**
• **Eckerhart, Roland, Dr.
63486 Bruchköbel (DE)**
• **Thiele, Georg, Dr.
63450 Hanau (DE)**
• **Goor, Gustaaf, Dr.
63457 Hanau (DE)**
• **Möller, Alexander, Dr.
63571 Gelnhausen (DE)**

(56) Entgegenhaltungen:
**EP-A- 0 200 260           FR-A- 2 471 950**

• **DATABASE WPI Section Ch, Week 9239 Derwent Publications Ltd., London, GB; Class B07, AN 92-319278 XP002082780 & JP 04 222627 A (PAURREK KK), 12. August 1992 (1992-08-12)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft Granulate, enthaltend Titansilikalit-1, ein Verfahren zu ihrer Herstellung sowie ihre Verwendung als Katalysator.

Titansilikalit-1 ist aus dem US-Patent 4,410,501 bekannt. Er ist ein effizienter Katalysator bei der Oxidation verschiedener organischer Substrate mit Wasserstoffperoxid, wie zum Beispiel bei der Epoxidierung von Olefinen (EP 1 100119), der Ammoximierung von Carbonylverbindungen (EP 0 267 362) und der Hydroxilierung von Aromaten (US 4,396,783). Die katalytische Aktivität verschiedener Titansilikalit-1-Proben hängt neben dem Titangehalt auch von der Größe der Primärkristalle ab (A. J. H. P. van der Pol, Appl. Cat. A 92 (1992) 113). So wird eine Abnahme der katalytischen Aktivität mit zunehmender Größe der Primärkristalle beobachtet.

Um eine möglichst hohe katalytische Aktivität in der flüssigen Phase zu erzielen, ist es daher vorteilhaft, Titansilikalit-1 mit kleinen Primärkristallen einzusetzen. Auf der anderen Seite ist die Fest-Flüssig-Trennung von kleinen Partikeln, die Durchmesser von wenigen Mikrometern und kleiner aufweisen, in technischen Prozessen relativ aufwendig. Eine Abtrennung und die damit mögliche Wiedergewinnung der Katalysatorpartikel ist wegen ihrer hohen Herstellkosten und des damit verbundenen Wertes erwünscht.

Es ist bekannt, Titansilikalit-1 zu agglomerieren, um die Fest-Flüssig-Trennung zu verbessern.

Ein Verfahren zur Agglomerierung von Titansilikalit-1 bzw. zur Herstellung eines Titansilikalit-1-Granulats wird in EP-A 0 200 260, EP-A 0 265 018 und US 5,500,199 beschrieben. Dazu wird zunächst durch Hydrolyse eines Tetraalkylorthosilikats mit einer wäßrigen Lösung von Tetra-n-propylammoniumhydroxid eine wäßrige Lösung von oligomerem Siliciumdioxid und Tetra-n-propylammoniumhydroxid hergestellt. In dieser Lösung werden die Titansilikalit-1-Kristalle suspendiert und die erhaltenen Suspensionen anschließend sprühgetrocknet. Dabei sollen kugelförmige Agglomerate mit einem Durchmesser von 5 bis 1000 μm entstehen. Sie setzen sich aus Titansilikalit-1-Kristallen und oligomerem Siliciumdioxid zusammen, wobei die Zeolithkristalle "mittels Si-O-Si-Bindungen eingeschlossen" sein sollen. Andere Siliciumdioxid-Quellen als Tetraalkylorthosilikate, wie kolloidales Siliciumdioxid oder Natriumsilikate, führen zu Produkten geringerer Qualität (EP-A 0 200 260). Für die Zusammensetzung des Katalysators wird in EP-A 0 200 260 ein Molverhältnis von oligomerem Siliciumdioxid zu Titansilikalit-1 von 0.05 bis 0.11 angegeben. In EP-A 0 265 018 und US-A 5,500,199 wird ein Massenverhältnis des oligomeren Siliciumdioxids zu Titansilikalit-1 von 5 : 95 bis 20 : 80 angegeben, entsprechend einem $SiO_2$-Gehalt von 5 bis 20 Gew.-%.

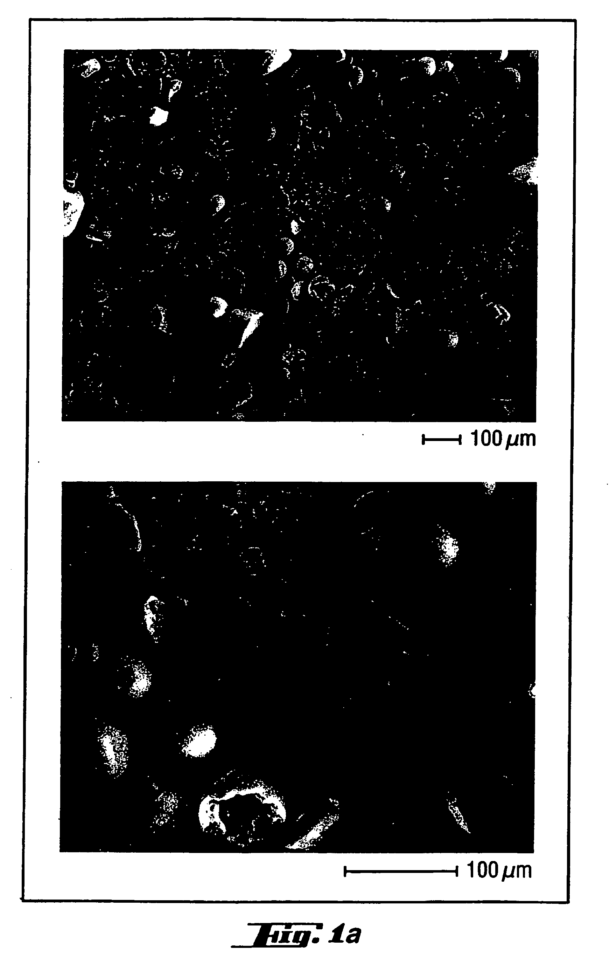

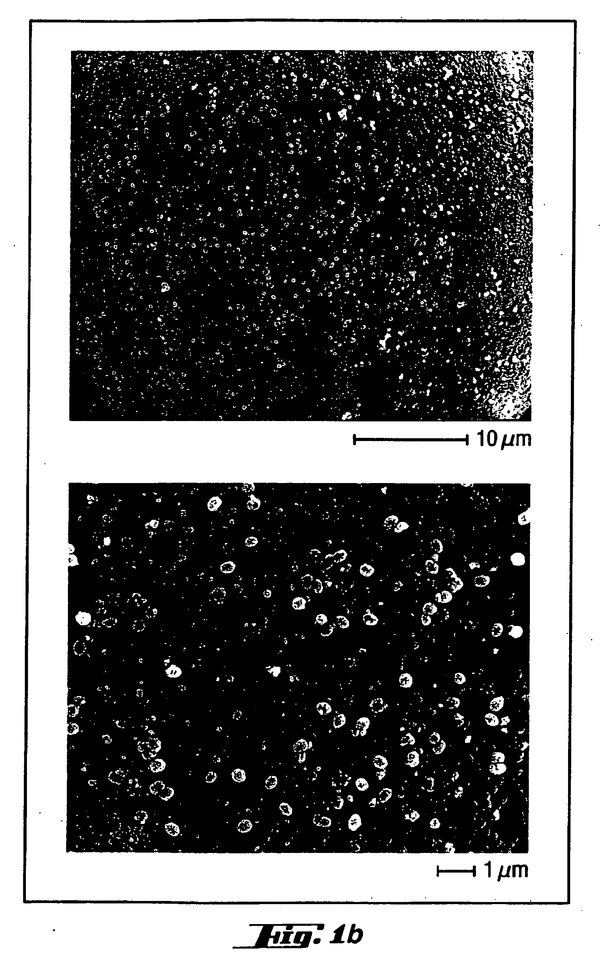

Die gemäß dem bekannten Verfahren hergestellten Titansilikalit-1-Granulate weisen schwerwiegende Nachteile auf. So zeigen gemäß US-A 5,500,199, Beispiel 8 hergestellte Titansilikalit-1-Granulate (siehe Beispiel 1 dieser Anmeldung) in Oxidationsreaktionen mit Wasserstoffperoxid, wie zum Beispiel der Epoxidierung von Propen, eine im Vergleich zum nicht granulierten Titansilikalit-1-Pulver deutlich geringere Aktivität (siehe Beispiel 2 dieser Anmeldung). Auf den REM-Aufnahmen dieses Materials (siehe Figur 1) ist zu erkennen, daß die agglomerierten Titansilikalit-1-Kristalle von einer relativ kompakten katalytisch inaktiven Schicht überzogen sind. Dadurch ist die Zugänglichkeit der Zeolithkristalle für die Reaktanten herabgesetzt. Die Folge ist eine verminderte katalytische Aktivität. Außerdem liegen beträchtliche Anteile der Agglomerate in Form von schalenartigen oder kugelförmigen Bruchstücken vor. An den jeweiligen Bruchkanten findet ein deutlich erhöhter mechanischer Abrieb statt.

Das bekannte Verfahren zur Herstellung von Titansilicalit-1-Granulaten weist zusätzlich eine Reihe von Nachteilen auf:

- Die Abtrennung der bei der Kristallisation gebildeten Titansilikalit-1-Kristalle von der Mutterlauge ist wegen ihrer geringen mittleren Größe von kleiner als einem Mikrometer sehr aufwendig.

- Die Mutterlauge enthält Reste an nicht umgesetztem Tetrapropylammoniumhydroxid und muß entsorgt werden. Dies ist mit hohen Kosten verbunden.

- Für die Herstellung der Suspension des als Binder wirkenden "oligomeren Siliciumdioxids" werden zusätzliche Mengen der teueren Rohstoffe Tetraethylorthosilikat und Tetrapropylammoniumhydroxid benötigt.

Aufgabe der Erfindung sind Granulate, die Titansilikalit-1 enthalten und die Nachteile der bekannten Granulate nicht aufweisen, sowie ein einfaches und wirtschaftliches Verfahren zur Herstellung der Titansilikalit-1 enthaltenden Granulate.

Gegenstand der Erfindung ist ein Verfahren zur Herstellung von Titansilikalit-1 enthaltenden Granulaten, welches dadurch gekennzeichnet ist, daß man ein Synthesegel, welches eine $SiO_2$-Quelle, eine $TiO_2$-Quelle, eine Tetra-n-propylammoniumionen enthaltende Verbindung, eine Base und Wasser enthält, unter hydrothermalen Bedingungen kristallisiert, die dabei entstehende Titansilikalit-1-Suspension, gegebenenfalls nach Aufkonzentrieren und/oder Zusatz weiterer Stoffe, einer Sprühtrocknung oder einer Wirbelschicht-Sprühgranulationstrocknung unterzieht und das so gebildete Titansilikalit-1-Granulat bei einer Temperatur von 400 und 1000°C, vorzugsweise von 500 und 750°C kalziniert.

Ein weiterer Gegenstand der Erfindung sind Granulate, enthaltend Titansilikalit-1, erhältlich nach dem erfindungsgemäßen verfahren.

Als Rohstoffe für die Herstellung des Synthesegels, aus dem unter hydrothermalen Bedingungen Titansilikalit-1 kristallisiert, können beispielsweise verwendet werden: Tetraalkylorthosilikat (US 4, 410, 501; DE-A 196 23 972.9), Aerosil (DE-A 196 23 972.9) als $SiO_2$-Quelle;

Tetraalkylorthotitanat (US 4,410,501; DE-A 196 41 782.1), Titan(III)chlorid (Gao, J. Chem. Soc., Chem. Commun. 1995, 835; DE-A 196 23 972.9), Titan(IV)flourid (Tuel, EP 0 665 188), Titan(IV)oxychlorid (EP 0 200 260) als $TiO_2$-Quelle;

$SiO_2$-$TiO_2$-Kopräzipitate (EP 0 311 983), pyrogenen Si-Ti Mischoxide (DE-A 196 24 340.8) als kombinierte $SiO_2$- und $TiO_2$-Quelle;

Tetra-n-propylammoniumhydroxid (US 4,410,501), Tetra-npropylammoniumbromid (Müller, stud. Surf. Sci. Catal. 84 (1994) 203) als Templat.

Tetra-n-propylammoniumhydroxid (US 4,410,501), Ammoniak (Müller, stud. Surf. Sci. Catal. 84 (1994) 203), 1,6-Diaminohexan (Tuel, Zeolithes 16 (1996) 108) als Base.

Bei der Herstellung des Synthesegels kann eine $SiO_2$-Quelle, eine $TiO_2$-Quelle, eine Tetra-n-propyl-ammoniumionen enthaltende Verbindung und eine Base in Wasser gelöst, suspendiert bzw. zur Reaktion gebracht werden, wobei dieser Schritt bei einer Temperatur zwischen -10°C und 100°C, vorzugsweise jedoch zwischen 0 und 60°C durchgeführt werden kann. Die bei der Verwendung von Tetraalkylorthosilikaten und/oder Tetraalkylorthotitanaten freiwerdenden Alkohole können anschließend destillativ abgetrennt werden. Nach einer gegebenenfalls durchzuführenden Alterung des Gels kann die Kristallisation bei einer Temperatur zwischen 100 und 200°C, vorzugsweise zwischen 160 und 185°C, unter autogenem Druck erfolgen. Die Kristallisationsdauer kann zwischen 1 Stunde und 10 Tagen, vorzugsweise zwischen 1 und 24 Stunden betragen.

In einer bevorzugten Ausführungsform des erfindungsgemäßen Verfahrens kann man den Feststoffgehalt der Titansilikalit-1-Suspension vor der Sprühtrocknung oder der Wirbelschicht-Sprühgranulationstrocknung erhöhen. Dazu kann man beispielsweise die nach der Kristallisation erhaltene Titansilikalit-1-Suspension teilen und aus einem Teil der Suspension den Feststoff durch kuchenbildende Filtration, Zentrifugation oder andere geeignete Verfahren abtrennen. Den Filterkuchen oder das Sediment kann man anschließend, gegebenenfalls nach einem Waschschritt, in dem verbliebenen Teil der Titansilikalit-1-Suspension suspendieren. Um die Abtrennung des Feststoffes zu erleichtern, kann man der Titansilikalit-1-Suspension geeignete Flockungshilfsmittel, wie z. B. Praestol 187 K (Fa. Stockhausen GmbH & Co. KG), oder Säuren, wie z. B. Salzsäure oder Essigsäure, zusetzen. Den Festoffgehalt der Titansilikalit-1-Suspension kann man auch durch Eindampfung, vorzugsweise unter vermindertem Druck, oder Cross-Flow-Filtration erhöhen.

Die für die Sprühtrocknung oder Wirbelschicht-Sprühgranulationstrocknung eingesetzte Titansilikalit-1-Suspension, die gegebenenfalls nach einem der zuvor beschriebenen Verfahren aufkonzentriert werden kann, kann einen Feststoffgehalt zwischen 5 und 600 g/l, vorzugsweise zwischen 100 und 500 g/l aufweisen, wobei sich der Feststoffgehalt auf das bei 550° C kalzinierte Material bezieht. Der Gehalt an gelösten Silikaten kann zwischen 0.05 und 150 g/l, vorzugsweise zwischen 5 und 60 g/l, und der pH-Wert über 7,0 liegen. Die Suspension kann außerdem zwischen 0,05 und 15 g/l gelöste Titanate enthalten. Der Titansilikalit-1-Suspension können außerdem Bindehilfsstoffe oder Porenbildner, wie zum Beispiel Tetraalkylorthosilikat, Kieselsol, pyrogene Kieselsäure (Aerosil), Tetra-n-propylammoniumhydroxid, Tylose, Pentaerythrit usw. zugesetzt werden.

Zur erfindungsgemäßen Herstellung von Titansilikalit-1-Granulaten aus Suspensionen kommen insbesondere die Sprühtrocknung (R. Herbener, Chem.-Ing.-Tech. 59 (1987) 112) und die Wirbelschicht-Sprühgranulationstrocknung, die gegebenenfalls kontinuierlich durchgeführt werden kann, in Betracht (H. Uhlemann, Chem.-Ing.-Tech. 62 (1990) 822). Diesen Methoden gemeinsam ist die Verdampfung der Suspensionsflüssigkeit und die Formgebung in einem Verfahrensschritt unter Ausnutzung eines intensiven Wärmeund Stoffaustauschs. Die für die Verdampfung erforderliche Energiezufuhr erfolgt dabei jeweils über einen heißen Luftoder Inertgasstrom.

Beim erfindungsgemäßen Verfahren kann die nach der Hydrothermalsynthese gebildete Titansilikalit-1-Suspension, vorzugsweise nach Aufkonzentrieren des Feststoffes, versprüht werden. Als Bindemittel wirken in der Titansilikalit-1-Suspension enthaltene echt oder kolloidal gelöste Silikate und Titanate. Die Titansilikalit-1-Kristalle liegen dabei in einer reaktiven Form vor, da ihre Oberfläche reich an Si-OH-Gruppen ist. Dies begünstigt die Bildung stabiler chemischer Bindungen mit den Silikaten und Titanaten nach der Eliminierung von Wasser.

Bei der Sprühtrocknung wird die Suspension zunächst in feine Tröpfchen, die anschließend im Trocknungsgasstrom fluidisiert und getrocknet werden, zerteilt. Die während der Trocknung entstehenden Kugeln sind oftmals hohl, da die Verfestigung der Partikeln von außen nach innen erfolgt. Die Partikelbemessungen variieren insbesondere mit der Größe der gebildeten Sprühtropfen und dem Feststoffanteil in der Suspension. Als Zerstäubungsvorrichtung eignen sich beispielsweise 1-Stoff-Druckdüsen, 2-Stoff-Zerstäuberdüsen oder Rotationszerstäuber. Die Eintrittstemperatur des Trägergases kann zwischen 200 und 700°C, vorzugsweise zwischen 300 und 500°C, die Austrittstemperatur des Trägergases kann zwischen 50 und 200°C, vorzugsweise zwischen 90 und 160°C liegen. Das Trocknungsgas und die Sprühtrocknung können im Gleich- oder Gegenstrom geführt werden.

Bei der Wirbelschicht-Sprühgranulationstrocknung, die auch kontinuierlich betrieben werden kann, werden die erzeugten Sprühtropfen in eine Wirbelschicht aus bereits weitgehend getrockneten Partikeln eingebracht. Trifft ein Sprühtropfen auf ein Partikel, dann verteilt sich die Flüssigkeit und mit ihr der suspendierte und/oder gelöste Feststoff auf der Partikeloberfläche. Anschließend verdampft die Tropfenflüssigkeit und zurückbleibt eine dünne Feststoffschicht auf der Oberfläche. Durch Wiederholung dieser Vorgänge werden die Partikel in der Wirbelschicht schalenartig aufgebaut. Anders als bei der Sprühtrocknung bilden die mittels der Wirbelschicht-Sprühgranulationstrocknung auf kompakten Keimvorlagen aufgebauten Partikel Vollkörper. Als Keimvorlage können bevorzugt nach dem erfindungsgemäßen Verfahren hergestellte Titansilikalit-1-Granulate, die vorher auf eine geeignete Korngröße vermahlen werden können, eingesetzt werden. Als Keimvorlage können auch andere Materialien, wie z. B. $SiO_2$, $Al_2O_3$, $TiO_2$, $ZrO_2$ oder die entsprechenden Mischoxide sowie Mischungen dieser Substanzen, Tone und natürliche Silikate, Zeolithe, wie z. B. ZSM-5, dealuminierter Y-Zeolith usw. eingesetzt werden. Ein- und Austrittstemperaturen des Trocknungsgases liegen in denselben Bereichen wie bei der Sprühtrocknung.

Die nach einem der erfindungsgemäßen Trocknungsverfahren enthaltenen Granulate können anschließend bei einer Temperatur zwischen 400 und 1000°C, vorzugsweise zwischen 500 und 750°C, kalziniert werden. Die Kalzination kann in einer Inertgas-Atmosphäre, vorzugsweise in einer Stickstoff-Atmosphäre, oder in Luftatmosphäre durchgeführt werden. In einer bevorzugten Ausführungsform können die Granulate zunächst in einer Stickstoffatmosphäre kalziniert werden. Es kann dann graduell auf Luftatmosphäre umgeschaltet werden. Die mechanische Stabilität der Titansilikalit-1-Granulate nimmt im bevorzugten Temperaturbereich zwischen 500 und 750°C mit steigender Temperatur zu, während die katalytische Aktivität nicht nachteilig beeinflußt wird.

Die erfindungsgemäßen Titansilikalit-1-Granulate bestehen aus Titansilikalit-1-Kristallen, Siliciumdioxid und Titandioxid. Dabei wirken Siliciumdioxid und Titandioxid, die sowohl amorph als auch in kristalliner Form vorliegen können, als Bindemittel zwischen den Titansilikalit-1-Kristallen. Siliciumdioxid und Titandioxid entstehen während des Granulationsprozesses und dem darauffolgenden Kalzinierschritt aus den Silikaten und Titanaten, die in der eingesetzten Titansilikalit-1-Suspension echt oder kolloidal gelöst sind. Die Zusammensetzung der Titansilikalit-1-Granulate kann bei Kenntnis der Zusammensetzung der für die Granulation eingesetzten Titansilikalit-1-Suspension leicht berechnet werden Werden für die durch Wirbelschicht-Sprühgranulationstrocknung hergestellten Titansilikalit-1-Granulate andere Materialien als Titansilikalit-1 als Keimvorlage verwendet, so können die Granulate noch weitere Elemente, wie zum Beispiel Aluminium, Zirkon, Alkali- oder Erdalkalimetalle, enthalten.

Der Durchmesser der erfindungsgemäßen Titansilikalit-1-Granulate liegt zwischen 5 und 500 $\mu$m. Durch Sprühtrocknung hergestellte Granulate können dabei teilweise hohl sein, während durch Wirbelschicht-Sprühgranulationstrocknung hergestellte Granulate überwiegend kompakt sind.

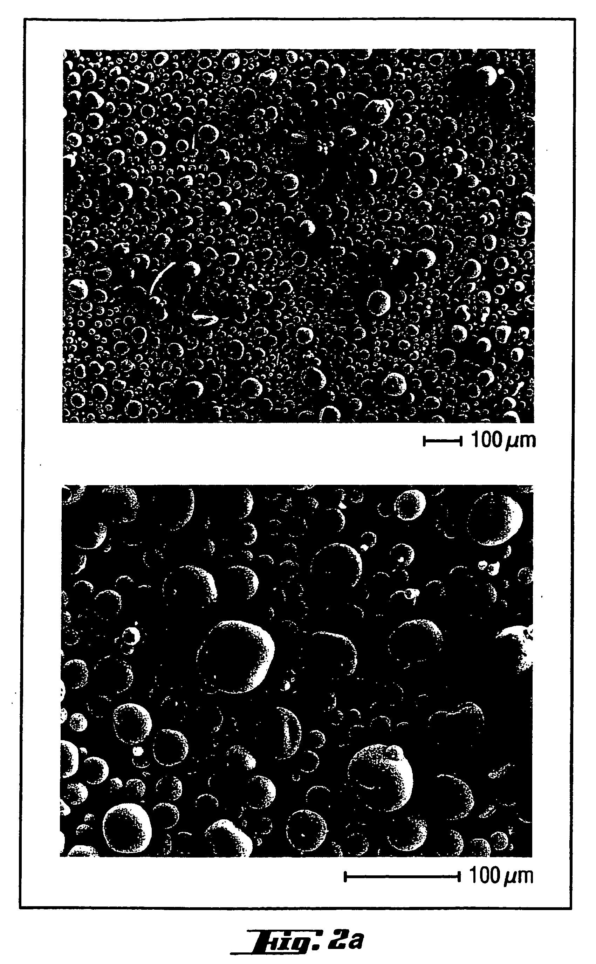

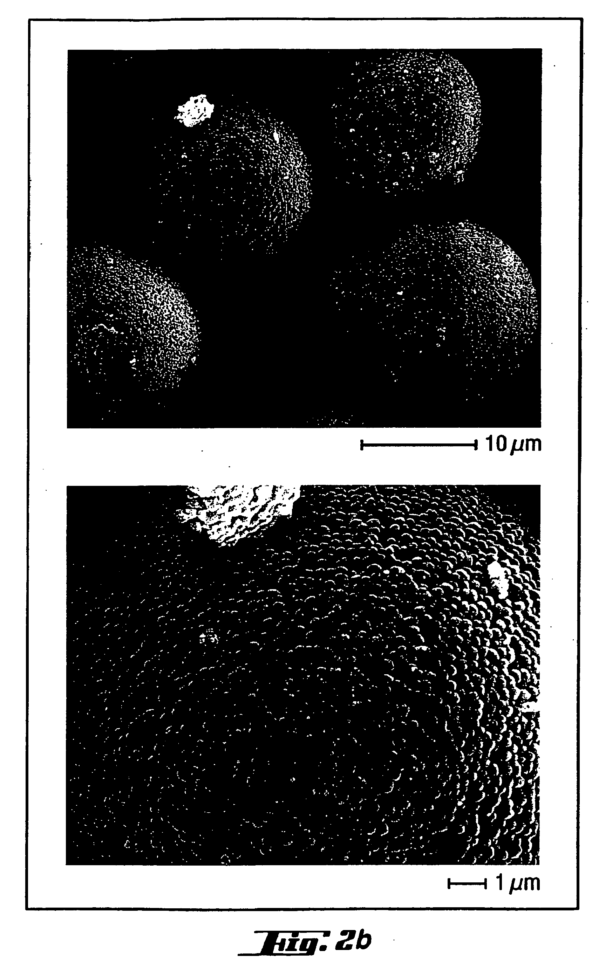

Die erfindungsgemäßen Granulate zeichnen sich, auch bei geringem Gehalt an Siliciumdioxid und Titandioxid (kleiner als 5 Gew.-%), durch eine hohe mechanische Stabilität aus. So zeigen die REM-Aufnahmen erfindungsgemäßer Titansilikalit-1-Granulate (Figuren 2,4 und 6) vorwiegend intakte Agglomerate, während man bei den nach dem Stand der Technik hergestellten Granulaten überwiegend stark beschädigte Agglomerate beobachtet (Figur 1). Mechanisch besonders stabil sind solche Granulate, die aus dickwandigen oder kompakten Agglomerate bestehen.

Auf Grund der im Vergleich zum Siliciumdioxid geringen Löslichkeit des Titandioxids in Wasser, ist die Stabilität der erfindungsgemäßen Titansilikalit-1-Granulate in wasserhaltigen Reaktionsmedien deutlich höher als die von Granulaten nach dem Stand der Technik, bei denen nur oligomeres Siliciumdioxid als Binder wirkt. Im Widerspruch zur Literatur (vgl. z.B. Notari, Advances in Catalysis, 41 (1995) 253) haben wir dabei keinen nachteiligen Einfluß des Titandioxids auf die katalytische Aktivität der Titansilikalit-1-Granulate festgestellt.

Die erfindungsgemäßen Titansilikalit-1-Granulate besitzen eine hohe katalytische Aktivität. Der Grund dafür ist, daß die agglomerierten Titansilikalit-1-Kristalle nur von einer dünnen Schicht von katalytisch inaktivem Siliciumdioxid und Titandioxid überzogen sind, wie auf den REM-Aufnahmen solcher Materialien zu erkennen ist. Enthalten die Granulate weniger als 5 Gew.-% Siliciumdioxid- und Titandioxidgehalt, so lassen die REM-Aufnahmen überhaupt keine solche Schicht auf den Titansilikalit-1-Kristallen erkennen. Im Unterschied zu den Granulaten nach dem Stand der Technik ist bei den erfindungsgemäßen Granulaten die Zugänglichkeit der Titansilikalit-1-Kristalle für die Reaktanden daher nicht oder nur geringfügig herabgesetzt.

Die erfindungsgemäßen Titansilikalit-1-Granulate sind insbesondere als Suspensionskatalysatoren geeignet. Sie können beispielsweise bei der Epoxidierung von Olefinen mittels Wasserstoffperoxid, vorzugsweise der Epoxidierung von Propen mittels Wasserstoffperoxid, der Hydroxilierung von Aromaten mittels Wasserstoffperoxid, der Ammoximierung von Carbonylverbindungen mittels Wasserstoffperoxid und Ammoniak und bei der Oxidation von sekundären Alkoholen mittels Wasserstoffperoxid zu Ketonen eingesetzt werden.

Das erfindungsgemäße Verfahren zur Herstellung von Titansilikalit-1-Granulaten hat gegenüber dem Stand der Technik den Vorteil, daß sich eine Abtrennung der Titansilikalit-1-Kristalle aus der bei der Hydrothermalsynthese gebildeten Suspension, beispielsweise durch Filtration oder Zentrifugation, erübrigt. Außerdem fällt keine Mutterlauge, die noch Reste an nicht umgesetztem Tetra-n-propylammonium-hydroxid enthält, an. Die kostenaufwendige Entsorgung ist daher nicht mehr notwendig. Weiterhin entfallen die folgenden Verfahrensschritte: die Herstellung einer Lösung von oligomerem Siliciumdioxid und Tetra-n-propylammoniumhydroxid aus Tetraalkylorthosilikat und einer wäßrigen Lösung von Tetra-n-propylammoniumhydroxid sowie die anschließende Suspendierung des Titansilikalit-1-pulvers in dieser Lösung. Außerdem wird kein zusätzliches Tetraethylorthosilikat und Tetrapropylammoniumhydroxid für den Granulationsschritt verbraucht. Aus diesen Gründen ist das erfindungsgemäße Verfahren erheblich einfacher, effizienter und kostengünstiger.

**Beispiele:**

**Beispiel 1: Herstellung eines Titansilikalit-1-Sprühgranulats (Vergleichsbeispiel)**

Ein Titansilikalit-1-Sprühgranulat wird, wie in US-Patent 5,500,199, Beispiel 8 beschrieben, hergestellt:

Es werden in einem Becherglas zu 35,6 g einer Tetrapropylammoniumhydroxid-Lösung (40 Gew.%) und 83,1 g entionisiertem Wasser unter kräftigem Rühren 111,2 g Tetraethylorthosilicalit zugegeben. Diese Mischung wird eine Stunde bei 60°C gerührt. Nach Zugabe von 487,0 g entionisiertem Wasser wird eine weitere Stunde gerührt. In die klare Lösung werden dann 300 g eines zentrifugierten, gewaschenen und bei 550°C kalzinierten Titansilikalit-1-Pulvers (chemische Zusammensetzung: 97,2 Gew.% $SiO_2$ und 2,7 Gew.% $TiO_2$) dispergiert. Die so hergestellte Titansilikalit-1-Suspension wird über einen Sprühtrockner (NIRO-Atomizer Modell 1638; Eintrittstemperatur 380°C; Austrittstemperatur 103°C; Rotationsgeschwindigkeit der Zerstäuberscheibe 16000 $min^{-1}$) getrocknet. Der erhaltene Feststoff wird bei 550°C zwei Stunden in Stickstoff-Atmosphäre und anschließend zwei Stunden in Luftatmosphäre kalziniert. Die Ausbeute beträgt 259,2 g, wobei die Verluste durch Anbackungen an den Wänden des Sprühtrockners und Austrag nicht berücksichtigt werden.

Die chemische Zusammensetzung des so erhaltenen Produktes ist 97,4 Gew.% $SiO_2$ und 2,65 Gew.% $TiO_2$.

Aus den eingesetzten Mengen an Titansilikalit-1 und Tetraethylorthosilikat (TEOS) kann die Zusammensetzung des so hergestellten TS-1-Granulats berechnet werden:

| | |
|---|---|
| Gehalt an Titansilikalit-1 | 90,3 Gew.-% |
| Gehalt an Siliciumdioxid | 9,7 Gew.-% |

Daraus kann die erwartete chemische Zusammensetzung des Granulats berechnet werden:

$$SiO_2\text{-}Gehalt=[m(SiO_2)+m(TS\text{-}1)x\ y(SiO_2)]/[m(SiO_2)+m(TS\text{-}1)]$$
$$=[32,1g+(300,0g\ x\ 0,972)]/[(32,1 + 300,0\ g)=97,47\ \%$$

$$TiO_2\text{-}Gehalt=[m(TS\text{-}1)x\ y(TiO_2)]/[m(SiO_2)+ m(TS\text{-}1)]$$
$$=(300,0\ g\ x\ 0,027)/(32,1\ g + 300,0g)= 2,44\ \%$$

Es bedeuten:

$m(SiO_2)$=   Masse an oligomerem $SiO_2$ in g, gebildet durch die Hydrolyse von TEOS,
$m(TS\text{-}1)$=   Masse Titansilikalit-1 in g,
$y(SiO_2)$=   $SiO_2$-Gehalt des Titansilikalit-1- Pulvers in Gew.-%,
$y(TiO_2)$=   $TiO_2$-Gehalt des Titansilikalit-1- Pulvers in Gew.-%

Die so berechneten Erwartungswerte stimmen mit den experimentell bestimmten recht gut überein.

Die Rasterelektronenmikroskop-Aufnahme des Titansilikalit-1-Sprühgranulats (Figur 1) zeigt, daß dieses aus 10 bis 75 μm großen Hohlkugeln, von denen ein erheblicher Teil zerbrochen ist, besteht. Bei 10 000 facher Vergrößerung erkennt man, daß die etwa 0,3 um großen Titansilikalit-1-Kristalle von einer kompakten, amorphen Schicht überzogen sind.

**Beispiel 2: Anwendungsbeispiel zur Epoxidierung von Propylen mit Wasserstoffperoxid**

10 g des gemäß Beispiel 1 hergestellten Titansilikalit-1-Granulats werden zwei Stunden mit 100 ml einer 1,0 N Ammoniumacetatlösung bei 80°C behandelt, anschließend mit entionisiertem Wasser gewaschen, getrocknet und fünf Stunden bei 550°C in Luftatmosphäre kalziniert. In einem thermostatisierten Laborautoklav mit Begasungsrührer werden dann 1,0 g dieses so behandelten Materials in 300 ml Methanol bei 40°C unter Propylenatmosphäre vorgelegt und das Lösungsmittel bei 3 bar Überdruck mit Propylen gesättigt. Dann werden unter Rühren 13,1 g 30 Gew.% wäßrige Wasserstoffperoxidlösung in einer Portion zugegeben und die Reaktionsmischung bei 40°C und 3 bar gehalten, wobei über einen Druckregler Propylen nachdosiert wird, um den Verbrauch durch die Reaktion auszugleichen. In regelmäßigen Abständen werden über ein Filter Proben entnommen und der Wasserstoffperoxidgehalt der Reaktionsmischung durch Redoxtitration mit Cer(IV)sulfat-Lösung bestimmt. Die Auftragung von $\ln(c/c_o)$ gegen die Zeit t, wobei c die gemessene $H_2O_2$-Konzentration zum Zeitpunkt t und $C_o$ die berechnete $H_2O_2$-Konzentration zu Beginn der Reaktion ist, ergibt eine Gerade. Aus der Steigung der Geraden wird mit der Beziehung $\frac{dc}{dt} = k \cdot C \cdot C_{kat}$, worin $C_{kat}$ für die Katalysatorkonzentration in kg Katalysator je kg Reaktionsmischung steht, die Aktivitätskennzahl k zu 26,0 min$^{-1}$ bestimmt.

In einem zweiten Experiment wird die Aktivitätskennzahl des gemäß Beispiel 1 hergestellten unverformten Titansilikalit-1-Pulvers bestimmt. Sie beträgt 31,3 min$^{-1}$. Der Aktivitätsverlust durch die Granulation beträgt somit 17,0 %.

**Beispiel 3: Herstellung eines Titansilikalit-1-Sprühgranulats**

Ein Gel zur Synthese von Titansilikalit-1 wird in Anlehnung an US-Patent 4,410,501, Beispiel 1, hergestellt und drei Stunden bei 175°C unter autogenem Druck kristallisiert. Die nach der Hydrothermalsynthese erhaltenen Suspension wird geteilt.

Durch Zentrifugieren wird von 3,0 l dieser Suspension der Feststoff abgetrennt, mit entionisiertem Wasser gewaschen, bei 105°C über Nacht getrocknet und in Luftatmosphäre fünf Stunden bei 550°C kalziniert. Die Ausbeute an Titansilikalit-1 beträgt 334,7 g, entsprechend einem Feststoffgehalt in der Suspension von 111,6 g/l. Die chemische Zusammensetzung des Produktes ist 2,7 Gew.% $TiO_2$ . und 97,3 Gew.% $SiO_2$. Um den Gehalt an gelöstem $SiO_2$ und $TiO_2$ in der Mutterlauge zu bestimmen, wird das noch schwach trübe Zentrat über einen 0,2 $\mu$m Membranfilter filtriert. Die anschließende Analyse des Filtrats ergibt einen $SiO_2$-Gehalt von 12,8 g/l und einen $TiO_2$-Gehalt von 0,70 g/l.

Weitere drei Liter der oben genannten Titansilikalit-1-Suspension werden über einen Sprühtrockner (NIRO-Atomizer Modell 1638; Eintrittstemperatur 380°C; Austrittstemperatur 95 - 98°C; Rotationsgeschwindigkeit der Zerstäuberscheibe 13000 - 14800 min$^{-1}$) getrocknet. Der erhaltene Feststoff wird zunächst bei 550°C zwei Stunden in Stickstoff-Atmosphäre und anschließend zwei Stunden in Luftatmosphäre kalziniert. Die Ausbeute an Feststoff beträgt 259,2 g, wobei die Verluste durch Anbackungen an den Wänden des Sprühtrockners oder Austrag nicht berücksichtigt werden. Die chemische Zusammensetzung des so hergestellten Produktes beträgt 97,0 Gew.% $SiO_2$ und 2,95 Gew.% $TiO_2$.

Aus dem Feststoffgehalt sowie dem Gehalt an gelöstem $SiO_2$ und $TiO_2$ der für die Sprühtrocknung eingesetzten Titansilikalit-1-Suspension folgt für die Zusammensetzung des daraus hergestellten Titansilikalit-1-Sprühgranulats:

Gehalt an Titansilikalit-1 :    89,2 Gew.-%
Gehalt an Siliciumdioxid :    10,2 Gew.-%
Gehalt an Titandioxid :      0,6 Gew.-%

Die erwartete chemische Zusammensetzung des Titansilikalit-1-Granulats kann folgendermaßen berechnet werden:

```
SiO₂-Gehalt = m(SiO₂)+ m(TS-1)x y(SiO₂)]/[m(SiO₂)+ m(TS-1)]
            = [38,4 g +(334,7 g x 0,972)]/(38,4 g + 334,7 g)
            = 96,94%


TiO₂-Gehalt = [m(TiO₂)+ m(TS-1)x y(TiO₂)]/[m(SiO₂)+ m(TiO₂) +
              m(TS-1)]
            = [2,1g + (334,7 g x 0,027)]/(38,4 g + 2,1 g +
              334,7 g)=2,97 %
```

Es bedeuten:

$m(SiO_2)$ =     Masse an $SiO_2$ in g
$m(TiO_2)$ =     Masse an $TiO_2$ in g,
$m(TS-1)$ =     Masse Titansilikalit-1 in g
$y(SiO_2)$ =     $SiO_2$-Gehalt des Titansilikalit-1- Pulvers in Gew.-%
$y(TiO_2)$ =     $TiO_2$-Gehalt des Titansilikalit-1-Pulvers in Gew.-%

Die berechneten Werte stimmen gut mit den experimentell bestimmten Werten überein.

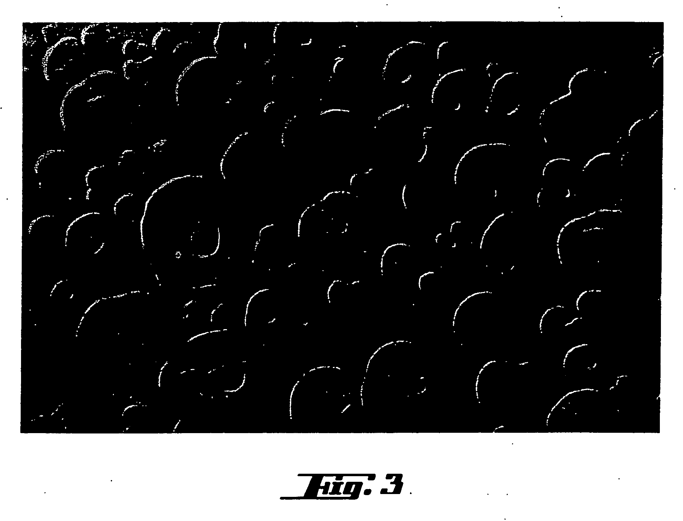

Die Rasterelelektronenmikroskop-Aufnahme des Titansilikalit -1-Sprühgranulats (Figur 2) zeigt, daß dieses aus 5 - 60 um großen, überwiegend kugelförmigen Agglomeraten besteht. Nur ein kleiner Teil der Agglomerate ist nicht intakt. Bei 10 000 facher Vergrößerung erkennt man, daß die etwa 0,3 um großen Titansilikalit-1-Kristalle von einer dünnen amorphen Schicht überzogen sind. Eine Dünnschnitt-Aufnahme (Figur 3) zeigt, daß die meisten Partikel hohl sind.

**Beispiel 4: Anwendungsbeispiel zur Epoxidierung von Propylen mit Wasserstoffperoxid**

Beispiel 2 wird mit dem gemäß Beispiel 3 hergestellten Titansilikalit-1-Granulat durchgeführt. Die Aktivitätskennzahl beträgt 30,9 $min^{-1}$. In einem zweiten Experiment wird die Aktivitätskennzahl des in Beispiel 3 hergestellten unverformten Titansilikalit-1-Pulvers bestimmt. Sie beträgt 31,3 $min^{-1}$. Der Aktivitätsverlust durch die Granulation beträgt somit 1,3 %.

**Beipiel: 5: Herstellung eines Titansilikalit-1-Sprühgranulats mit angereichterter Titansilikalit-1- Suspension**

Der Feststoff von 6,0 1 einer gemäß Beispiel 3 hergestellten Titansilikalit-1-Suspension wird durch Zentrifugieren abgetrennt. Der noch feuchte Filterkuchen wird dann in 2,05 1 dieser Titansilikalit- 1-Suspension suspendiert. Der Gehalt an Titansilikalit-1 in der so hergestellten Suspension wird wie in Beispiel 3 bestimmt und beträgt 403,6 g/l (bezogen auf den kalzinierten Feststoff). Der $SiO_2$- und $TiO_2$-Gehalt der über ein 0,2 $\mu m$ Membranfilter filtrierten Mutterlauge betragen 12,6 g/l $SiO_2$ und 0,69 g/l $TiO_2$. 2,25 1 der so hergestellten Titansilikalit-1-Suspension werden, wie in Beispiel 3 beschrieben, über einen Sprühtrockner getrocknet und anschließen kalziniert.

Die chemische Zusammensetzung des so hergestellten Produktes beträgt 97,1 Gew.% $SiO_2$ und 2,83 Gew. % $TiO_2$. Aus dem Feststoffgehalt sowie dem Gehalt an gelöstem $SiO_2$ der für die Sprühtrocknung eingesetzten Titansilikalit-1-Suspension ergibt sich für die Zusammensetzung des daraus hergestellten Titansilikalit-1-Sprühgranulats:

| | |
|---|---|
| Gehalt an Titansilikalit-1 : | 96,8 Gew.-% |
| Gehalt an Siliciumdioxid : | 3,0 Gew.-% |
| Gehalt an Titandioxid : | 0,2 Gew.-% |

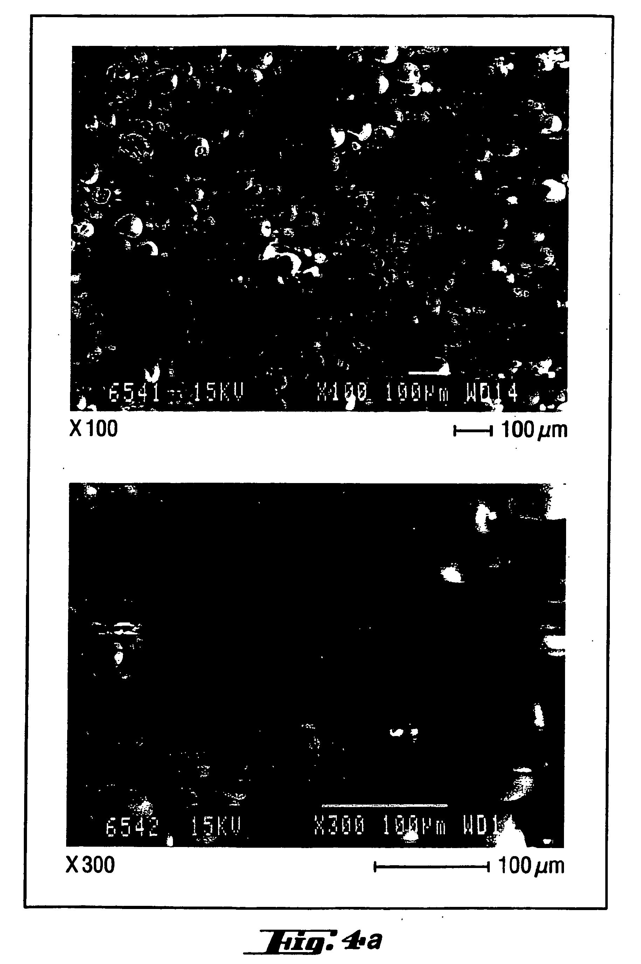

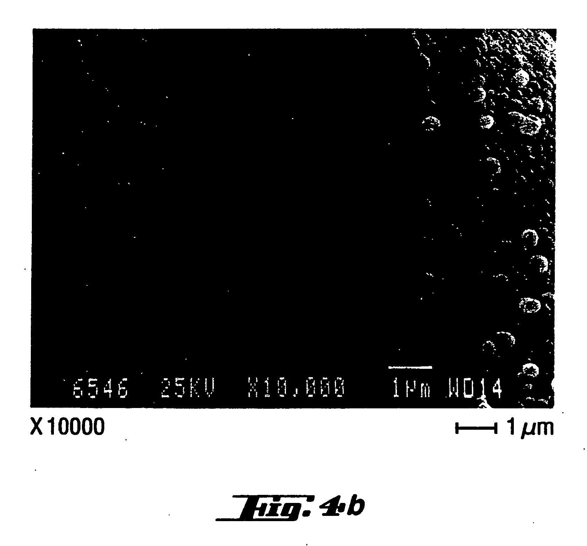

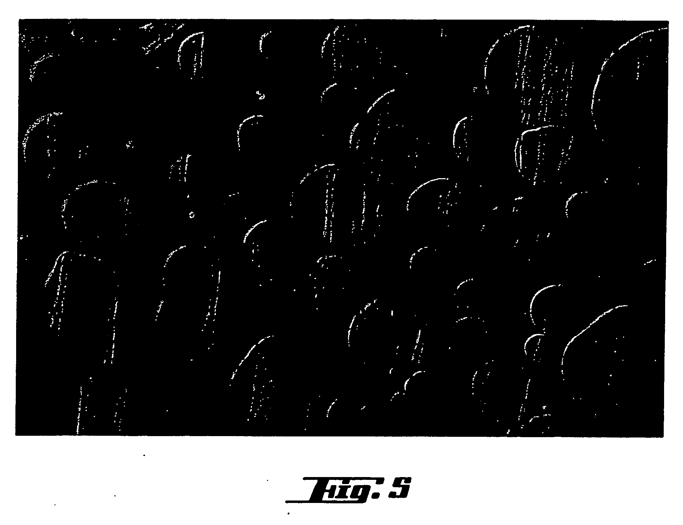

Die Rasterelektronenmikroskop-Aufnahme des Titansilikalit-1-Sprühgranulats (Figur 4) zeigt, daß dieses aus 5 - 65 um großen kugelförmigen, überwiegend intakten Agglomeraten besteht. Bei 10 000 facher Vergrößerung erkennt man keine amorphe Schicht auf den etwa 0,3 $\mu m$ großen Titansilikalit-1-Kristallen. Die Dünnschnitt-Aufnahme (Figur 5) zeigt außerdem, daß die Agglomerate überwiegend kompakt sind.

**Beispiel 6: Anwendungsbeispiel zur Epoxidierung von Propylen mit Wasserstoffperoxid**

Beispiel 2 wird mit dem gemäß Beispiel 5 hergestellten Titansilikalit-1-Granulate wiederholt. Die Aktivitätskennzahl des Titansilikalit-1-Granulats beträgt 29,0 $min^{-1}$, die des unverformten Titansilikalit-1-Pulvers 29,6 $min^{-1}$. Der Akti-vitätsverlust durch die Granulation beträgt somit 2 %.

**Beispiel 7: Herstellung eines Titansilikalit-1-Sprühgranulats mit angereicherter Titansilikalit-1-Suspension**

30 kg einer in Anlehnung an Beispiel 3 im 300 1-Maßstab hergestellten Titansilikalit-1-Suspension werden durch Zugabe von 105 g Flockungsmittel Praestol 187 K (Fa. Stockhausen, Krefeld) geflockt. Anschließend erfolgt eine Abtrennung des Feststoffs mittels Zentrifugation. Das noch feuchte Sediment wird dann in 33 kg der Original-Suspension suspendiert. Der Feststoffgehalt der so hergestellten Suspension wird wie in Beispiel 3 bestimmt und beträgt 182,5 g/l. Der $SiO_2$- und $TiO_{-2}$-Gehalt der über ein 0,2 um Membranfilter filtrierten Mutterlauge betragen 13,7 g/l $SiO_2$ und 0,22 g/l $TiO_2$.

Die so hergestellte Titansilikalit-1-Suspension wird über einen Sprühtrockner (Modell Anhydro, Typ Lab. 3, Firma APV; Lufteintrittstemperatur 440°C, Luftvolumenstrom 250m$^3$/h, Luftaustrittstemperatur 140°C, Zerstäuberdruck 3.5 bar; Zweistoffdüse Spraying Systems, Flüssigkeitsdüse Nr. 100 105, Luftdüse 200 278, 45°) getrocknet. Eine geringe Probenmenge des dabei erzielten Produkts wird anschließend kalziniert.

Die chemisches Zusammensetzung des so hergestellten Produktes beträgt 96,9 Gew.% SiO$_2$ und 3,1 Gew. % TiO$_2$. Aus dem Feststoffgehalt sowie dem Gehalt an gelöstem SiO$_2$ der für die Sprühtrocknung eingesetzten Titansilikalit-1-Suspension ergibt sich für die Zusammensetzung des daraus hergestellten Gehalt anTitansilikalit-1-Sprühgranulat:

| | |
|---|---|
| Gehalt an Titansilikalit-1 : | 92,9 Gew.-% |
| Gehalt an Siliciumdioxid : | 7,0 Gew.-% |
| Gehalt an Titandioxid : | 0,1 Gew.-% |

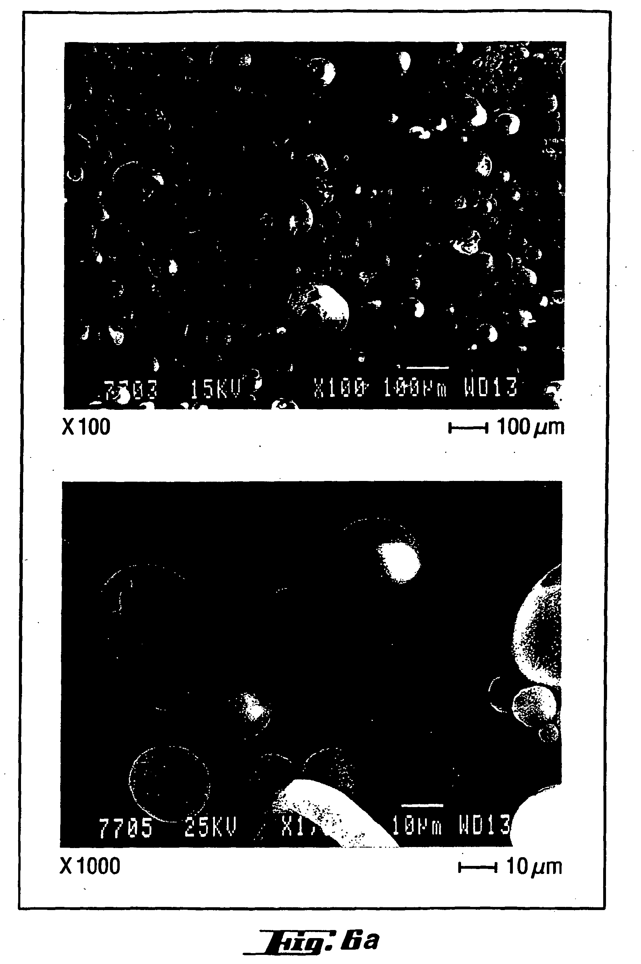

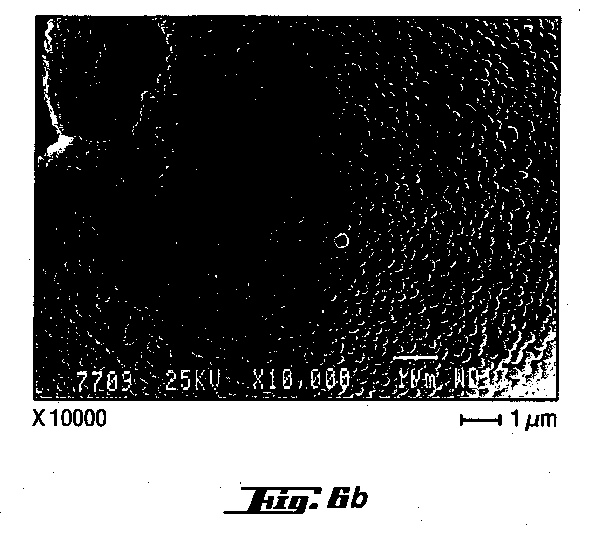

Die Rasterelektronenmikroskop-Aufnahme des Titansilikalit-1-Sprühgranulats (Figur 6) zeigt, daß dieses aus 50 - 70 um großen Agglomeraten besteht. Bei 10 000 facher Vergrößerung erkennt man, daß die circa 0,3 µm großen Primärkristalle mit einer amorphen Schicht überzogen sind.

**Beispiel 8: Anwendungsbeispiel zur Epoxidierung von Propylen mit Wasserstoffperoxid**

Beipiel 2 wird mit dem in Beispiel 7 hergestellten Granulat wiederholt. Die Aktivitätskennzahl des Titansilikalit-1-Granulats beträgt 24,2 min$^{-1}$, die des unverformten Titansilikalit-1-Pulvers 26,9 min$^{-1}$. Der Aktivitätsverlust durch die Granulation beträgt somit 10,0 %.

**Beispiel 9: Herstellung eines Titansilikalit-1-Wirbelschicht-Sprühgranulats**

600 g eines auf eine d$_{50}$-Wert von 30 µm gemahlenen Titansilikalit-1-Granulats mit einem Titansilikalit-1-Gehalt von 87,7 Gew.-%, einem SiO$_2$-Gehalt von 11,3 Gew.-% und einem TiO$_2$-Gehalt von 1,0 Gew.-% werden in einem Laborwirbelschichttrockner mit einer Anströmfläche von 0,027 m$^2$ vorgelegt. Der Feststoff wird mit Stickstoff (Eintrittstemperatur 300°C, Austrittstemperatur 120°C, Volumenstrom im Laufe der Granulation zunehmend von 30 bis 37 Normkubikmeter/h) fluidisiert. Eine wie in Beispiel 3 hergestellte Titansilikalit-1-Suspension mit einem Feststoffgehalt von 111,6 g/l (bezogen auf das kalzinierte Material), einen SiO$_2$-Gehalt von 12,8 g/l und einem TiO$_2$-Gehalt von 0,70g/l wird mittels einer 2-Stoffdüse (Schlick Mod. 970/0, Düsenbohrung 0,8 mm, Zerstäubungsluft-Druck 1,8 bar, Suspensionsstrom im Laufe der Granulation zunehmend von ca. 15 bis ca 45 g/min) von oben auf die Wirbelschicht versprüht. Die batchweise betriebenen Wirbelschicht-Sprühgranulationstrocknung wird so lange durchgeführt, bis die Wirbelschichtmenge ca. 530 g beträgt. Verluste an Feststoff durch Austrag aus der Wirbelschicht werden dabei nicht berücksichtigt. Das erhaltene Wirbelschicht-Sprühgranulat wird bei 550°C zwei Stunden in Stickstoff-Atmosphäre und anschließend zwei Stunden in Luftatmosphäre kalziniert.

Die chemische Zusammensetzung des so hergestellten Produktes beträgt 97,1 Gew.% SiO$_2$ und 3,03 Gew. % TiO$_2$. Aus dem Feststoffgehalt sowie dem Gehalt an gelöstem SiO$_2$ der für die Wirbelschicht-Sprühgranulationstrocknung eingesetzten Titansilikalit-1-Suspension folgt für die Zusammensetzung der Schale des daraus hergestellten TS-1-Granulats:

| | |
|---|---|
| Gehalt an Titansilikalit-1 : | 89,2 Gew.-% |
| Gehalt an Siliciumdioxid : | 10,2 Gew.-% |
| Gehalt an Titandioxid : | 0,6 Gew.-% |

**Beispiel 10: Anwendungsbeispiel zur Epoxidierung von Propylen mit Wasserstoffperoxid**

Beipiel 2 wird mit dem in Beispiel 9 hergestellten Granulat wiederholt. Die Aktivitätskennzahl des Titansilikalit-1-Granulats beträgt 19,4 min$^{-1}$, die des unverformten Titansilikalit-1-Pulvers 19,9 min$^{-1}$. Der Aktivitätsverlust durch die Granulation beträgt somit 2,5 %.

**Beispiel 11. Herstellung eines Titansilikalit-1-Wirbelschicht-Sprühgranulats**

Ein Teil des gemäß Beispiel 7 hergestellten, unkalzinierten Titansilikalit-Sprühgranulats wird durch Windsichtung und Trockensiebung klassiert. Von der Fraktion mit einem d$_{50}$-Wert von 45 µm werden 610 g in einem Laborwirbelschichttrockner mit einer Anströmfläche von 0,027 m$^2$ vorgelegt. Der Feststoff wird mit Luft (Eintrittstemperatur 300°C, Austrittstemperatur 120°C, Volumenstrom im Laufe der Granulation zunehmend von 32 bis 41 Normkubikmeter/h) fluidisiert. Eine wie in Beispiel 7 aufkonzentrierte Titansilikalit-1-Suspension wird mittels einer 2-Stoffdüse (Schlick Mod. 970/0, Düsenbohrung 0,8 mm, Zerstäubungsluft-Druck 1,8 bar, Suspensionsstrom im Laufe der Granulation zunehmend von ca. 18 bis 50 g/min) von oben auf die Wirbelschicht versprüht. Das erhaltene Wirbelschicht-Sprühgranulat wird bei 550°C zwei Stunden in Stickstoff-Atmosphäre und anschließend zwei Stunden in Luftatmosphäre kalziniert. Aus dem Feststoffgehalt sowie dem Gehalt an gelöstem $SiO_2$ der für die Sprühtrocknung eingesetzten Titansilikalit-1-Suspension ergibt sich für die Zusammensetzung des daraus hergestellten Titansilikalit-1-Granulats:

| | |
|---|---|
| Gehalt an Titansilikalit-1 : | 92,9 Gew.-% |
| Gehalt an Siliciumdioxid : | 7,0 Gew.-% |
| Gehalt an $TiO_2$ : | 0,1 Gew.-% |

**Beispiel 12: Anwendungsgebiet zur Epoxidierung von Propylen mit Wasserstoffperoxid**

Beipiel 2 wird mit dem in Beispiel 11 hergestellten Granulat wiederholt. Die Aktivitätskennzahl des Titansilikalit-1-Granulats beträgt 23,9 $min^{-1}$, die des unverformten Titansilikalit-1-Pulvers 26,9 $min^{-1}$. Der Aktivitätsverlust durch die Granulation beträgt somit 11 %.

Die REM (Raster Elektronen Mikroskop)-Aufnahmen der in gemäß den Beispielen hergestellten Granulate sind in den Zeichnungen dargestellt.

Es zeigen

Figur 1     das Titansilikalit-1-Sprühgranulat gemäß Beispiel 1

Figur 2     das Titansilikalit-1-Sprühgranulat gemäß Beispiel 3

Figur 3     eine Dünnschnitt-Aufnahme des Titansilikalit-1-Sprühgranulat gemäß Beispiel 3

Figur 4     das Titansilikalit-1-Sprühgranulat gemäß Beispiel 5

Figur 5     eine Dünnschnitt-Aufnahme des Titansilikalit-1-Sprühgranulat gemäß Beispiel 5

Figur 6     das Titansilikalit-1-Sprühgranulat gemäß Beispiel 7

**Patentansprüche**

1. Verfahren zur Herstellung von Titansilikalit-1 enthaltenden Granulaten, **dadurch gekennzeichnet, daß** man ein Synthesegel, welches eine $SiO_2$-Quelle, eine $TiO_2$-Quelle, eine Tetra-n-propylamoniumionen enthaltende Verbindung, eine Base und Wasser enthält, unter hydrothermalen Bedingungen kristallisiert, die dabei enstehende Titansilikalit-1-Suspension, gegebenenfalls nach Aufkonzentrieren und/oder Zusatz weiterer Stoffe, einer Sprühtrocknung oder einer Wirbelschicht-Sprühgranulationstrocknung unterzieht und das so gebildete Titänsilikalit-1-Granulat bei einer Temperatur von 400 bis 1000°C, vorzugsweise von 500 bis 750°C kalziniert.

2. Granulate, enthaltend Titansilikalit-1, erhältlich nach dem Verfahren gemäß Anspruch 1.

3. Verwendung der Granulate gemäß Anspruch 2 als Suspensions-Katalysatoren.

4. Verwendung der Granulate gemäß Anspruch 2 bei der Epoxidierung von Olefinen mittels Wasserstoffperoxid.

5. Verwendung der Granulate gemäß Anspruch 2 bei der Hydroxilierung von Aromaten mittels Wasserstoffperoxid.

6. Verwendung der Granulate gemäß Anspruch 2 bei der Ammoximierung von Carbonylverbindungen mittels Ammoniak und Wasserstoffperoxid.

7. Verwendung der Granulate gemäß Anspruch 2 bei der Oxidation von sekundären Alkoholen mittels Wasserstoffperoxid zu Ketonen.

**EP 1 382 391 B1**

**Claims**

1. Process for preparing granulates comprising titanium silicalite-1, **characterized in that** a synthesis gel comprising a $SiO_2$ source, a $TiO_2$ source, a compound comprising tetra-n-propylammonium ions, a base and water is crystallized under hydrothermal conditions, the resulting titanium silicalite-1 suspension is, optionally after concentrating and/or addition of further substances, subjected to spray drying or fluidized-bed spray granulation drying, and the titanium silicalite-1 granulate so formed is calcined at a temperature of 400 to 1000°C, preferably of 500 to 750°C.

2. Granulates comprising titanium silicalite-1, obtainable by the process according to Claim 1.

3. Use of the granulates according to Claim 2 as suspension catalysts.

4. Use of the granulates according to Claim 2 in the epoxidation of olefins using hydrogen peroxide.

5. Use of the granulates according to Claim 2 in the hydroxylation of aromatic compounds using hydrogen peroxide.

6. Use of the granulates according to Claim 2 in the ammoximation of carbonyl compounds using ammonia and hydrogen peroxide.

7. Use of the granulates according to Claim 2 in the oxidation of secondary alcohols to ketones using hydrogen peroxide.


**Revendications**

1. Procédé de préparation de granules contenant de la silicalite 1 de titane, **caractérisé en ce qu'**on cristallise dans des conditions hydrothermales un gel de synthèse, qui contient une source de $SiO_2$, une source de $TiO_2$, un composé contenant des ions tétra-n-propylammonium, une base et de l'eau, on soumet la suspension de silicalite 1 de titane alors formée, éventuellement après concentration et/ou addition d'autres substances, à un séchage par pulvérisation ou à un séchage en granulation par pulvérisation en lit fluidisé et on calcine la granule de silicalite 1 de titane ainsi formée à une température de 400 à 1000°C, de préférence de 500 à 750°C.

2. Granules contenant de la silicalite 1 de titane, que l'on peut obtenir selon le procédé suivant la revendication 1.

3. Utilisation des granules suivant la revendication 2, comme catalyseurs de suspension.

4. Utilisation des granules suivant la revendication 2 dans l'époxydation d'oléfines à l'aide de peroxyde d'hydrogène.

5. Utilisation des granules suivant la revendication 2 dans l'hydroxylation de substances aromatiques à l'aide de peroxyde d'hydrogène.

6. Utilisation des granules suivant la revendication 2 dans l'ammoximation de composés carbonylés à l'aide d'ammoniac et de peroxyde d'hydrogène.

7. Utilisation des granules suivant la revendication 2 dans l'oxydation d'alcools secondaires en cétones à l'aide de peroxyde d'hydrogène.

├──┤ 100 μm

├──────┤ 100 μm

*Fig. 1a*

10 μm

1 μm

Fig. 1b

⊢——⊣ 100 μm

⊢————⊣ 100 μm

*Fig. 2a*

10 μm

1 μm

Fig. 2b

Fig. 3

X 100                                          ⊢————⊣ 100 μm

X 300                                    ⊢————————⊣ 100 μm

Fig. 4a

X 10000 ⊢—⊣ 1 μm

*Fig. 4.b*

Fig. 5

X 100               ⊢──┤ 100 μm

X 1000            ⊢─┤ 10 μm

Fig. 6a

EP 1 382 391 B1

X 10000                          ⊢——⊣ 1 µm

*Fig. 6b*

20